# EUROPEAN PATENT APPLICATION

(11) **EP 4 632 252 A1**
(43) Date of publication of application: **15.10.2025**
(21) Application number: 24461559.7
(22) Date of filing: 08.04.2024
(51) Int. Cl.: F16J 15/00, B33Y 80/00, F16J 15/08

(54) **SEAL**

(71) Applicant: Goodrich Corporation, Charlotte, NC 28217 (US)
(72) Inventor: CZECHOWSKI, Kamil Krzysztof, 51-317 Wroclaw (PL); MOLFA, Mateusz Pawel, 51-317 Wroclaw (PL)
(74) Representative: Dehns

(57) **Abstract**

A seal for providing sealing between two mating parts of a system, the seal comprising: an annular seal body (10) defining an upper and a lower annular seal surface and a peripheral outer seal surface (12) between the upper and lower seal surfaces, the upper and lower seal surfaces and the peripheral outer seal surface defining an interior of the seal body; and a plurality of deployable members (15) located within, and circumferentially around, the interior of the seal body, each deployable member being fixed, at a first end, to the interior of the seal body, and having a seal member (14) mounted to an outer end opposite the first end, the deployable members configured to be located in retracted state within the interior of the seal body when the upper and lower annular seal surfaces are at a first distance from each other, and configured to deploy to extend the seal member out of the interior of the interior of the seal body as the upper and lower annular seal surfaces are compressed towards each other.

## Description

### TECHNICAL FIELD

The present disclosure is concerned with a seal, specifically a metal seal, for providing sealing between two mating bodies in gas or fluid systems, to prevent or minimise leakage at the interface between the bodies.

### BACKGROUND

Seals are used in many applications where gases or fluids are present, to prevent or minimise flow or leakage of the gas or fluid past a seal point, for example at locations where different parts of a system are connected or joined or where parts of a system are arranged to be movable relative to each other. Most commonly used seals are rubber or elastomeric seals in the form of e.g. seal blocks or sealing rings (so-called O-rings). Elastomeric seals generally provide reliable sealing in a wide range of applications, due to their pliability and resilience, and are cost effective, being low cost components. Over time, however, elastomeric seals tend to deteriorate and become brittle, which affects the quality of the sealing and results in leaks. In addition to deterioration due to aging, the sealing performance of elastomeric seals can also be affected by extreme temperatures, exposure to chemicals or abrasion. They may exhibit so-called 'compression set' or change in dimensions. In high pressure systems, elastomeric seals may also be susceptible to extrusion or blow out where the material is forced into clearances between mating components. Whilst in some applications, some leakage is not a serious problem, in many cases, such as pneumatic systems where certain gases or fluids are present, even a small amount of leakage can have serious consequences. In particular in dry environments, such as in gas systems, elastomeric seals have a short life. There is, therefore, a need for a more reliable seal that is less prone to deterioration over time.

### SUMMARY

According to the disclosure, there is provided a deployable metal seal configured to provide two stages of sealing - a primary seal stage and a secondary seal stage, to provide a reliable, long lasting and effective seal in a wide range of environments. The seal may be manufactured using 3D printing.

The seal includes a deployable sealing lip that deploys to provide a sealing interface between two mating components.

In one aspect, there is provided A seal for providing sealing between two mating parts of a system, the seal comprising: an annular seal body defining an upper and a lower annular seal surface and a peripheral outer seal surface between the upper and lower seal surfaces, the upper and lower seal surfaces and the peripheral outer seal surface defining an interior of the seal body; and a plurality of deployable members located within, and circumferentially around, the interior of the seal body, each deployable member being fixed, at a first end, to the interior of the seal body, and having a seal member mounted to an outer end opposite the first end, the deployable members configured to be located in retracted state within the interior of the seal body when the upper and lower annular seal surfaces are at a first distance from each other, and configured to deploy to extend the seal member out of the interior of the interior of the seal body as the upper and lower annular seal surfaces are compressed towards each other.

The seal may include a plurality of guide members arranged around the inner periphery of the annular seal body at locations corresponding to locations of the deployable members in the interior, the guide members configured to provide a guide surface to the deployable member as it deploys, to position the seal member, when deployed, in a lower position relative to the annular seal body lower surface.

Each deployable member may comprise two or more relatively foldable or pivotable sections between the fixed end and the seal member.

To increase the purchase of the seal, ridges may extend outwardly from the annular upper seal surface and/or the peripheral outer seal surface comprises folds defining outwardly extending fold edges.

The seal may be made of metal, and may be made by 3D printing, e.g. as a monolithic body.

According to another aspect, there is provided a method of sealing an interface between two mating parts, the method comprising locating a seal as claimed in any preceding claim on one of the two component parts at the interface location; bringing the other mating part into engagement with the one mating part with the seal therebetween; bringing the mating parts into closer mating engagement causing compression of the annular seal body therebetween, compression of the annular seal body causing deployment of the deployable member such that the seal member locates, under tension, in a gap between the first and second mating parts to form a primary seal therebetween, and wherein the peripheral outer surface in a compressed state forms a secondary seal between the mating parts.

The mating parts may comprise mating parts of a gas or fluid system, and may engage via a threaded connection wherein the seal member extends, in the deployed state, into a start of the thread.

### BRIEF DESCRIPTION

Examples of a seal according to this disclosure will now be described by way of example only and with reference to the drawings. It should be noted that these are examples only and that variations are possible within the scope of the claims.
Figure 1 shows a metal seal according to the disclosure.
Figure 2 shows a seal such as shown in Fig. 1 in a non-deployed state.
Figure 3 shows the seal in a deployed state.
Figures 4A to 4E shows the stages of compression of the seal as two mating surfaces are brought together.
Figure 5 shows a larger view of the seal in the deployed state.
Figures 6A, 6B and 6C show from, respectively, a front view, a cross-sectional view and an isometric view, an example of the seal in use between two mating components.

### DETAILED DESCRIPTION

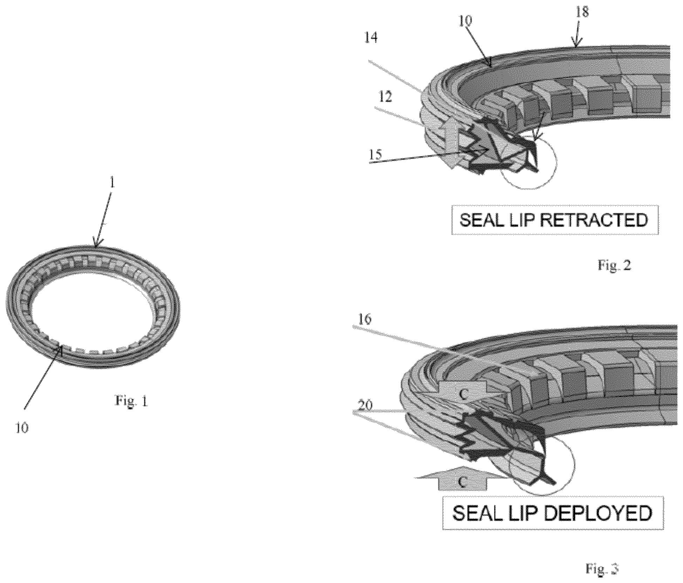

The metal seal according to the disclosure is an annular seal 1 as shown in Fig. 1. The seal may provide sealing between two mating components of a fluid or gas system, such as a conduit or pipe and another conduit or pipe or a connector or the like. The application of the seal is not limited herein.

The seal has an annular body 10, the outer periphery of which defines the outer periphery 12 of the seal. A plurality of deployable lip seals 14 are located within the annular body, mounted on deployable arms 15 configured to deploy radially inwards as will be described further below as the seal annular body is compressed in the axial direction when the mating components are brought towards each other with the seal located between them. On the radially inner side of the annular body, cutout guides 16 may be formed at locations around the inner periphery corresponding to the locations of the lip seals 14 within the annular body, again as will be described further below.

To further enhance the sealing performance of the seal, ridges or edges 18 may be formed on the upper surface of the body and the outer peripheral surface may also be shaped to define ridges or edges 20.

The annular body 10 has a hollow interior that receives the deployable arms and lip seals when in their retracted state before compression of the seal.

The deployable arms 15 are formed to be in a folded configuration when in the retracted state such they retain the lip seals within the annular body 10. When deployed, as described further below, the arms will unfold to extend radially inwards, with respect to the seal annular body 10, thus extending the seal lips 14 radially inwards. The presence of the guides 16 may cause the seal lips to also move in an axially downwards direction to their deployed state.

In the example shown, each deployable arm 15 may have three or more sections. A first section 15a is attached at a first end to the interior of the annular body. The second end is movable relative to the annular body. The second section 15b extends from the second end of the first section to the third section 15c to which the seal lip 14 is attached. The second section 15b is foldable or pivotable relative to the first section about the second end of the first section. The third section 15c, from which the lip seal 14 extends, may be fixed, but at an angle to the second section. Alternatively, the third section may actually be part of the lip seal extending in a generally downwards direction from the second section of the arm. In other examples, the arm may have more relatively foldable sections.

In the example shown, the first end of the first section may be attached near the top of the annular seal, but other attachment points are also possible.

In the example shown, the lip seal 14 may have an inverted V-shape or an inverted Y-shape but other shapes are also possible.

Figure 2 shows the seal with the lip seals 14 in a retracted state where the seal is not compressed and the deployable arm 15 is folded inside the annular body with the lip seal within the envelope of the seal body defined by the guides 16 on the inner circumference.

Figure 3 shows the seal in a compressed state where the annular body 10 is compressed (arrows C) thus reducing the height of the annular body. The compression causes the annular body to push against the deployable arms such that the second end of the first section extends radially inwards of the annulus, extending the second section, which is also forced downwards, about the fold between the first and second sections of the arm by means of the relatively rigid or stiff guides 16. The guides 16 may thus guide the lip seal 16 in a relatively downwards direction with respect to the annulus.

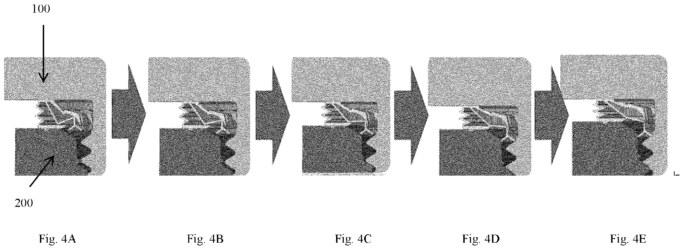

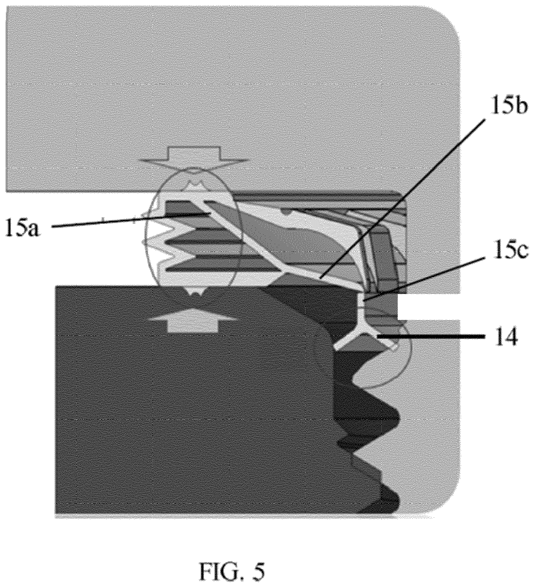

The sealing operation of the seal will be described with reference to the example shown in Figs. 4A to 4E and 5 in which the seal is provided between two mating parts 100, 200. To provide effective sealing at the interface between the two parts 100, 200, the seal of this disclosure is located, in its uncompressed state (e.g. as shown in Fig. 2) between the two parts to be brought into mating engagement, as shown in Fig. 4A. At this stage, the seal is not compressed and the lip seal is still retracted due to the folded state of the deployable arm 15. In the example shown, where the seal is provided with a ridge 18 (or several ridges) around its top edge, this may dig into the adjacent mating part 100 to some extent to provide enhanced sealing and to provide a more secure attachment of the seal in its correct location between the parts. As the two mating parts are brought into closer engagement (Fig. 4B) the annular body 10 is compressed between them (direction C in Fig. 3). As this compression occurs, the arms 15 begin to fold out/deploy relative to the guides 16. Continued compression (Figs. 4C, 4D) cause the arms to further deploy, and the guides 16 to guide the lip seals 14 in a radially inward and downward direction such that the lips are forced into the gap between the mating parts (Fig. 4E and Fig. 5). The location of the lip seal in the deployed state may be the location where an O-ring seal would be located in existing systems. The compressed annular body acting on the deployable arms ensure that the lip seal is kept under tension, and so locked in place, when located in the gap at the interface to provide the primary sealing stage between the two mating parts. The compressed outer periphery of the annular housing provides a secondary sealing stage. The sealing effect of the secondary stage is further enhanced if the outer peripheral wall of the annular housing has a folded or concertina-type configuration.

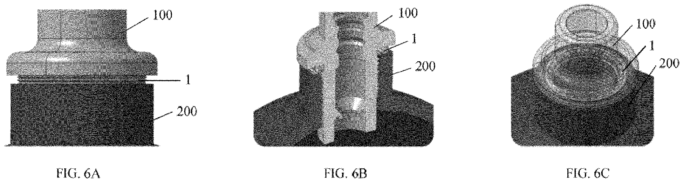

Figures 6A to 6C show an example of where such a seal may effectively be used. The figures show two component parts 100, 200 of a fluid or gas system, where one part 100, is screwed into another part 200 and connected by a screw thread. With such a connection, there is potential for leakage at the interface of the two parts including at the start of the thread. By locating the seal 1 of this disclosure at the interface between the two parts before they are screwed together, the risk of leakage can be avoided or at least reduced. The seal 1 is located, in this example, on the top of the second component 200 and the first component 100 is then positioned relative to the second component and screwed into attachment. As the first part is screwed in further with respect to the second component 200, the seal will be compressed, as described above, which will cause the primary seal lip seal to be deployed into the gap between the two components and, further, will compress the annular body outer peripheral wall to provide a secondary sealing effect between the two mating parts.

In examples, the seal of this disclosure is made of metal and may be manufactured using 3D printing. 3D printing enables more intricate shapes to be easily and quickly, and relatively inexpensively made than conventional manufacturing methods. The configuration of the seal component parts including the angles between the various folds such as on the outer peripheral wall are designed to be 3d-printable. The fact that the annular body is open at the location of the deployable seal also means that any residual powder from the printing process can be easily removed. A monolithic design using 3D printing eliminates the need for multiple components and joints, ensuring structural integrity and simplifying manufacture. Further, the precise configuration can be adapted to the specific application more easily and efficiently by using 3D printing.

The dual stage sealing mechanism provides an additional stage of protection when the seal is compressed, significantly improving sealing performance.

The metal seal has a longer life than conventional seals, which again improves cost-effectiveness and efficiency.

The seal of this disclosure provides particular improvements in high pressure applications and in 'dry' or gas systems compared to elastomeric seals, but also provides benefits in other applications.

## Claims

1. A seal for providing sealing between two mating parts of a system, the seal comprising:
an annular seal body (10) defining an upper and a lower annular seal surface and a peripheral outer seal surface (12) between the upper and
lower seal surfaces, the upper and lower seal surfaces and the peripheral outer seal surface defining an interior of the seal body; and
a plurality of deployable members (15) located within, and circumferentially around, the interior of the seal body, each deployable member being fixed, at a first end, to the interior of the seal body, and having a seal member (14) mounted to an outer end opposite the first end, the deployable members configured to be located in retracted state within the interior of the seal body when the upper and lower annular seal surfaces are at a first distance from each other, and configured to deploy to extend the seal member out of the interior of the interior of the seal body as the upper and lower annular seal surfaces are compressed towards each other.

2. The seal of claim 1, further comprising a plurality of guide members (16) arranged around the inner periphery of the annular seal body at locations corresponding to locations of the deployable members (15) in the interior, the guide members configured to provide a guide surface to the deployable member as it deploys, to position the seal member, when deployed, in a lower position relative to the annular seal body lower surface.

3. The seal of claim 1 or 2, wherein each deployable member comprises two or more relatively foldable or pivotable sections (15a, 15b, 15c) between the fixed end and the seal member.

4. The seal of any preceding claim, wherein the seal member has an inverted V- or an inverted Y-shape.

5. The seal of any preceding claim, further comprising one or more ridges (18) extending outwardly from the annular upper seal surface.

6. The seal of any preceding claim, wherein the peripheral outer seal surface comprises folds (20) defining outwardly extending fold edges.

7. The seal of any preceding claim, wherein the seal is made of metal.

8. The seal of any preceding claim, wherein the seal is made by 3D printing.

9. The seal of claim 8, wherein the seal is 3D printed as a monolithic body.

10. A method of sealing an interface between two mating parts (100, 200), the method comprising locating a seal as claimed in any preceding claim on one of the two component parts at the interface location; bringing the other mating part into engagement with the one mating part with the seal therebetween; bringing the mating parts into closer mating engagement causing compression of the annular seal body therebetween, compression of the annular seal body causing deployment of the deployable member such that the seal member locates, under tension, in a gap between the first and second mating parts to form a primary seal therebetween, and wherein the peripheral outer surface in a compressed state forms a secondary seal between the mating parts.

11. The method of claim 10, wherein the mating parts comprise mating parts of a gas or fluid system.

12. The method of claim 11, wherein the mating parts engage via a threaded connection wherein the seal member extends, in the deployed state, into a start of the thread.
